# EUROPEAN PATENT APPLICATION

(11) **EP 4 116 644 A1**
(43) Date of publication of application: **11.01.2023**
(21) Application number: 21764806.2
(22) Date of filing: 02.03.2021
(51) Int. Cl.: F25B 49/02, F24F 11/32, F24F 11/38

(54) **EQUIPMENT MANAGEMENT SYSTEM**

(30) Priority: 02.03.2020 JP 2020034990
(71) Applicant: Daikin Industries, Ltd., Osaka-shi, Osaka 530-8323 (JP)
(72) Inventor: KURODA, Kouhei, Osaka-shi, Osaka 530-8323 (JP); SAKAI, Toshiyuki, Osaka-shi, Osaka 530-8323 (JP)
(74) Representative: Conti, Marco
(86) International application number: PCT/JP2021/007938
(87) International publication number: WO 2021/177298

(57) **Abstract**

Temporary operation of an apparatus may be possible and temporary operation by a user may be possible although the apparatus stops when an abnormality of the apparatus occurs. However, excessive temporary operation may cause further damage to the apparatus. An apparatus management system (1, 1a) includes a storage unit (11) that stores information on repair of an apparatus in association with an abnormality occurring in the apparatus; an acquisition unit (12) that acquires the information on the repair of the apparatus and writes the information in the storage unit; and an operation content determination unit (13) that determines operation content of temporary operation. The information on the repair of the apparatus includes information on a repair request for the abnormality of the apparatus, and the operation content determination unit determines the operation content of the temporary operation in accordance with whether the repair request is present or not.

## Description

### Technical Field

The present disclosure relates to a temporary operation method when an abnormality of an apparatus occurs.

### Background Art

PTL 1 discloses that temporary operation is performed by remote control when an air conditioner stops due to an abnormality. As a result, even though a repair worker does not go to the site of the apparatus indicating the abnormality, the temporary operation is performed, and comfort of a user is ensured.

### Summary of Invention

### Technical Problem

When temporary operation is continued for a long period without repair when an abnormality occurs in an apparatus, the apparatus may be damaged.

### Solution to Problem

An apparatus management system according to a first aspect determines whether temporary operation is possible or not when an abnormality of an apparatus occurs, and performs the temporary operation when possible. The apparatus management system includes a storage unit, an acquisition unit, and an operation content determination unit. The storage unit stores information on repair of the apparatus in association with the abnormality occurring in the apparatus. The acquisition unit acquires the information on the repair of the apparatus and writes the information in the storage unit. The operation content determination unit determines operation content of the temporary operation. The information on the repair of the apparatus includes information on a repair request for the abnormality of the apparatus. The operation content determination unit determines the operation content of the temporary operation in accordance with whether the repair request is present or not.

With the apparatus management system according to the first aspect, since the operation content of the temporary operation is determined in accordance with whether the repair request is present or not, it is possible to reduce the risk of performing the temporary operation to the extent that the apparatus is damaged.

An apparatus management system according to a second aspect is the system according to the first aspect, in which, when the repair request is present, the operation content determination unit determines to perform the temporary operation. When the repair request is present, the period of the temporary operation is roughly determined. Thus, there is a little risk of damaging the apparatus even when the temporary operation is performed.

An apparatus management system according to a third aspect is the system according to the first aspect or the second aspect, in which, when the repair request is not present, the operation content determination unit determines to perform the temporary operation for a shorter period than a period when the repair request is present in a case where the temporary operation is performed, or determines not to perform the temporary operation.

An apparatus management system according to a fourth aspect is the system according to the first aspect, in which, the operation content determination unit determines to perform high-capacity operation in which the apparatus provides a high capacity when the repair request is present, and determines to perform low-capacity operation in which the apparatus provides a capacity lower than the capacity of the high-capacity operation when the repair request is not present.

An apparatus management system according to a fifth aspect is the system according to any one of the first aspect to the fourth aspect, in which, the operation content determination unit determines the operation content of the temporary operation in accordance with a time until a scheduled repair date and time.

An apparatus management system according to a sixth aspect is the system according to any one of the first aspect to the fifth aspect, in which, the operation content determination unit determines the operation content of the temporary operation in accordance with a season.

An apparatus management system according to a seventh aspect is the system according to any one of the first aspect to the sixth aspect, in which, the information on the repair of the apparatus includes operation data of the apparatus. The operation content determination unit determines the operation content of the temporary operation in accordance with the operation data of the apparatus.

An apparatus management system according to an eighth aspect is the system according to any one of the first aspect to the seventh aspect, in which, the apparatus is an air conditioner. The air conditioner has an indoor unit and an outdoor unit. The outdoor unit includes a compressor. The operation content of the temporary operation includes one or a combination of at least two selected from the group consisting of an operation frequency of the compressor, a number of the compressors to be operated, a number of the outdoor units to be operated, a set temperature of the indoor unit, an air volume of the indoor unit, an air direction of the indoor unit, and a period of the temporary operation.

An apparatus management system according to a ninth aspect is the system according to any one of the first aspect to the eighth aspect, the system further including an output unit that outputs abnormality information on the abnormality occurring in the apparatus. The output unit outputs the abnormality information corresponding to a performance status of the temporary operation and/or a repair request status.

An apparatus management system according to a tenth aspect is the system according to any one of the first aspect to the ninth aspect, the system further including an execution unit that executes the temporary operation based on the determined content of the temporary operation.

An apparatus management system according to an eleventh aspect is the system according to the first aspect, the system further including a control unit that controls the apparatus. When the abnormality of the apparatus occurs, the control unit stops operation of the apparatus and performs a first notification to a user of the apparatus. When the temporary operation is started after the operation of the apparatus is stopped and before the apparatus is repaired, the control unit further requests the user to perform a start operation different from a start operation when normal operation of the apparatus is started.

With the apparatus management system according to the eleventh aspect, when the temporary operation is started, since the user is requested to perform the start operation different from the start operation when the normal operation of the apparatus is started, the user is motivated to make the repair request.

An apparatus management system according to a twelfth aspect is the system according to the eleventh aspect, in which, the start operation is a button operation or a valve operation.

An apparatus management system according to a thirteenth aspect is the system according to the eleventh aspect or the twelfth aspect, in which, the control unit performs a second notification to the user of the apparatus after the temporary operation of the apparatus is started.

With the apparatus management system according to the thirteenth aspect, since the user is repeatedly notified, the user is motivated to make the repair request.

An apparatus management system according to a fourteenth aspect is the system according to any one of the eleventh aspect to the thirteenth aspect, in which, in the first notification or the second notification, the control unit requests the user to permit early repair, urges the user to permit the early repair, and informs a repairer of content responded by the user to the repair request.

An apparatus management system according to a fifteenth aspect is the system according to the fourteenth aspect, in which, the control unit acquires a plurality of repair available dates and times for the apparatus from the repairer, presents the plurality of repair available dates and times at the first notification or the second notification, and allows the user to select a repair available date and time to determine a repair date and time.

With the apparatus management system according to the fifteenth aspect, since the plurality of repair available dates and times are presented, the user can relatively easily request repair.

An apparatus management system according to a sixteenth aspect is the system according to any one of the eleventh aspect to the fifteenth aspect, the system further including a display. In the first notification or the second notification, the control unit causes the display to display content of the notification.

An apparatus management system according to a seventeenth aspect is the system according to the sixteenth aspect, in which, at the first notification or at the second notification, the control unit causes the display to display a reason for determining that the apparatus is abnormal, together with the content of the notification.

With the apparatus management system according to the seventeenth aspect, since the user can know the reason for determining that the apparatus is abnormal, the user can easily understand necessity of the repair request.

An apparatus management system according to an eighteenth aspect is the system according to the seventeenth aspect, in which, the reason for determining that the apparatus is abnormal includes data of the apparatus.

### Brief Description of Drawings

Fig. 1A is a schematic configuration diagram of an apparatus management system 1 according to first and third embodiments.
Fig. 1B is a diagram illustrating functions of a calculation unit 10 of the apparatus management system 1 according to the first embodiment.
Fig. 2 is a schematic configuration diagram of an air conditioner 20 that is an example of an apparatus 2 according to the first embodiment.
Fig. 3 is a flowchart illustrating an operation control method for the apparatus 2 in the apparatus management system 1 according to the first embodiment.
Fig. 4 illustrates a display screen of a display 30 that presents application for repair and temporary operation of an apparatus to a user in apparatus management systems 1 and 1a according to the first and second embodiments.
Fig. 5 is a schematic configuration diagram of the apparatus management system 1a according to the second embodiment.
Fig. 6 is a flowchart illustrating an operation control method for an apparatus 2 in the apparatus management system 1a according to the second embodiment.
Fig. 7 is a flowchart illustrating an operation control method for an apparatus 2 in the apparatus management system 1 according to the third embodiment.
Fig. 8 illustrates a display screen of a display 30 that notifies a user of an abnormality of an apparatus in the apparatus management system 1 according to the third embodiment. Description of Embodiments

### <First Embodiment

### (1) Configurations of Apparatus Management System 1 and Peripheral thereof

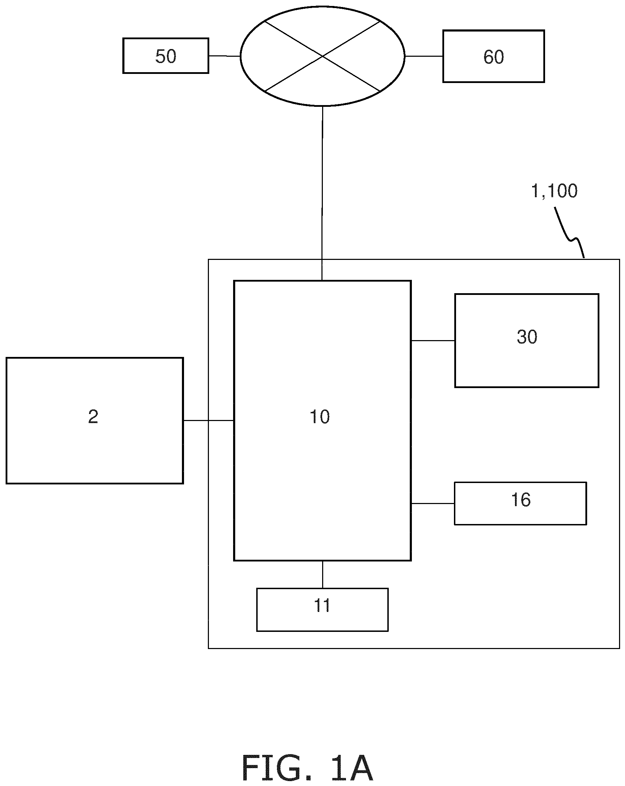

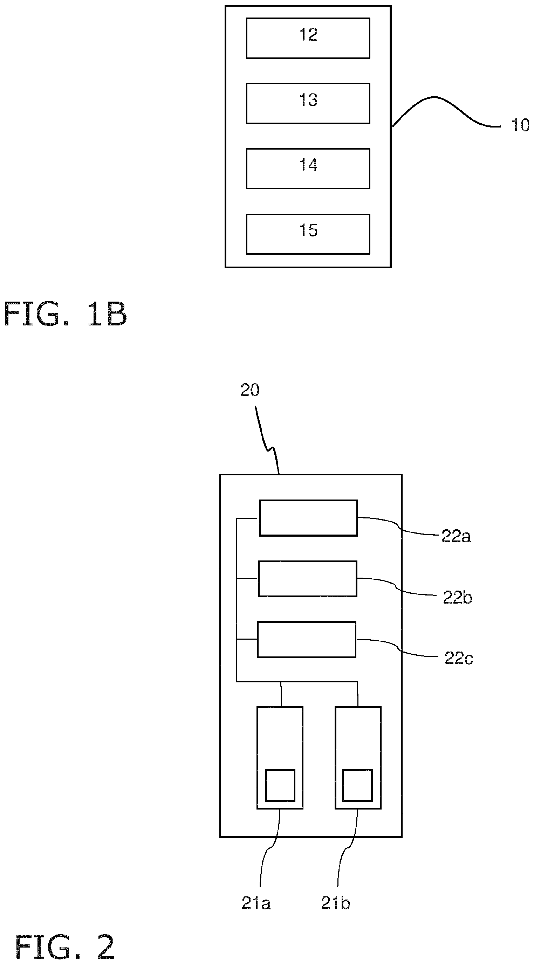

A schematic configuration of an apparatus management system 1 according to a first embodiment is illustrated in Fig. 1A, and a diagram illustrating functions of a calculation unit 10 of the apparatus management system 1 is illustrated in Fig. 1B. The apparatus management system 1 includes the calculation unit 10, a storage unit 11, a display 30, and an input unit 16. The calculation unit 10 includes an acquisition unit 12, an operation content determination unit 13, an output unit 14, and an execution unit 15. In other words, the apparatus management system 1 includes one or more computers 100. The acquisition unit 12, the operation content determination unit 13, the output unit 14, and the execution unit 15 included in the calculation unit 10 represent functions to be executed by the calculation unit 10. The acquisition unit 12, the operation content determination unit 13, the output unit 14, and the execution unit 15 may be separately disposed in a plurality of calculation units 10 or computers.

The calculation unit 10 may be referred to as a control unit. The control unit controls operation of an apparatus 2.

In the present embodiment, an apparatus management system program is stored in the storage unit 11 and executed by the calculation unit 10.

The acquisition unit 12 acquires operation data of the apparatus 2. The operation includes normal operation and temporary operation. The temporary operation is operation that is executed with more limitations added to capacity of the apparatus 2 than in the normal operation when an abnormality occurs in the apparatus 2. The operation data of the apparatus 2 includes start or stop of the entire apparatus 2 or parts thereof, the number of rotations of a motor of the apparatus 2, a measured value detected by a sensor provided in the apparatus 2, and so forth. The operation data of the apparatus 2 includes information on an abnormality occurring in the apparatus 2. The acquisition unit 12 acquires information input by a user to the input unit 16. The acquisition unit 12 acquires information on an abnormality and information on repair of the apparatus 2. The information on the repair includes information that the user requests repair when an abnormality of the apparatus occurs. The acquisition unit 12 writes the acquired information in the storage unit 11.

The storage unit 11 stores the operation data of the apparatus 2 acquired by the acquisition unit 12 and the information on the repair of the apparatus 2.

The execution unit 15 executes the temporary operation of the apparatus 2. The execution unit 15 may execute the normal operation of the apparatus 2.

The operation content determination unit 13 determines content of the temporary operation of the apparatus 2. The operation content determination unit 13 may determine content of the normal operation.

The apparatus management system 1 according to the present embodiment further includes the output unit 14. The output unit 14 outputs abnormality information. The abnormality information is information on the abnormality occurring in the apparatus. The abnormality information output by the output unit 14 is displayed on the display 30. The user can visually recognize the abnormality information on the display 30. The output unit 14 may further output a repair application button, a temporary operation application button, repair request information, or a performance status of the temporary operation.

The user can input a repair request or a temporary operation request to the input unit 16.

The apparatus management system 1 is connected to the apparatus 2. The apparatus management system 1 controls operation of the apparatus 2. The operation includes normal operation and temporary operation. Operation data of the apparatus 2 is transmitted to the apparatus management system 1.

The apparatus management system 1 is further connected to a server 60 of an apparatus management company via a network. The server 60 is a computer and includes a processor and a storage unit. The server 60 stores information on the apparatus 2, operation data of the apparatus 2, and so forth. The server 60 further stores a maintenance service dispatchable schedule of the apparatus management company.

A terminal 50 of the apparatus management company is connected to the network. The terminal 50 of the apparatus management company can access the server 60 via the network. By accessing the server 60, a user of the terminal 50 of the apparatus management company can cause the server 60 to store possible date and time of an on-site maintenance management service or can confirm date and time of the maintenance management service (repair request) input by the user of the computer 100.

### (2) Air Conditioner 20 as Example of Apparatus 2

An air conditioner 20 as an example of the apparatus 2 will be described with reference to Fig. 2. In the present embodiment, the air conditioner 20 includes a plurality of outdoor units 21a and 21b and a plurality of indoor units 22a, 22b, and 22c. The air conditioner 20 may include one outdoor unit or/and one indoor unit. The air conditioner 20 performs air conditioning in a room where the indoor units 22a, 22b, and 22c are installed. The air conditioning includes cooling, heating, and so forth. The indoor units 22a, 22b, and 22c are installed on an air-conditioning side, in other words, on a cooling or heating side, and the outdoor units 21a and 21b are installed on a heat-source side.

Each of the indoor units 22a, 22b, and 22c includes an indoor heat exchanger, a fan that controls the blow-out air volume of the indoor unit, a flap that adjusts the air direction, an indoor temperature sensor (none of which are illustrated), and so forth.

Each of the outdoor units 21a and 21b includes an outdoor heat exchanger and a compressor (none of which are illustrated).

In the air conditioner 20 according to the present embodiment, when an abnormality of the apparatus 2 occurs during normal operation of the apparatus 2 and the apparatus 2 stops, temporary operation is possible depending on the type of the abnormality. For example, when there is an abnormality in the compressor of the outdoor unit 21a, the outdoor unit 21b can be operated as temporary operation while the outdoor unit 21a is stopped. When the outdoor unit 21a includes a plurality of compressors, the outdoor unit 21a can be operated by stopping the compressor with an abnormality occurring and operating another compressor as temporary operation. Also, depending on the type and degree of the abnormality, it is possible to operate the compressor with the abnormality occurring, in a state where the operation frequency of the compressor is controlled to a certain value or less as temporary operation.

Temporary operation is possible even when an abnormality occurs in the indoor units 22a, 22b, and 22c of the air conditioner 20. For example, in a case where the plurality of indoor units 22a and 22b are installed in one room, when an abnormality occurs in the indoor unit 22a, air conditioning in the room can be performed by operating the indoor unit 22b in a state in which the indoor unit 22a is stopped as temporary operation. In this case, the capacity of indoor air conditioning is lowered by the amount corresponding to the stop of the one unit. Also, even when there is an abnormality in the one indoor unit 22a, temporary operation of the indoor unit 22a is possible under the limited capacity depending on the degree and status of the abnormality. For example, the temporary operation is possible in a state in which the air volume of the fan of the indoor unit 22a is limited, the target room temperature during the cooling operation is set to be higher, or the air direction is constant when the flap of the indoor unit 22a is stopped.

### (3) Operation Control Method for Apparatus 2 by Apparatus Management System 1

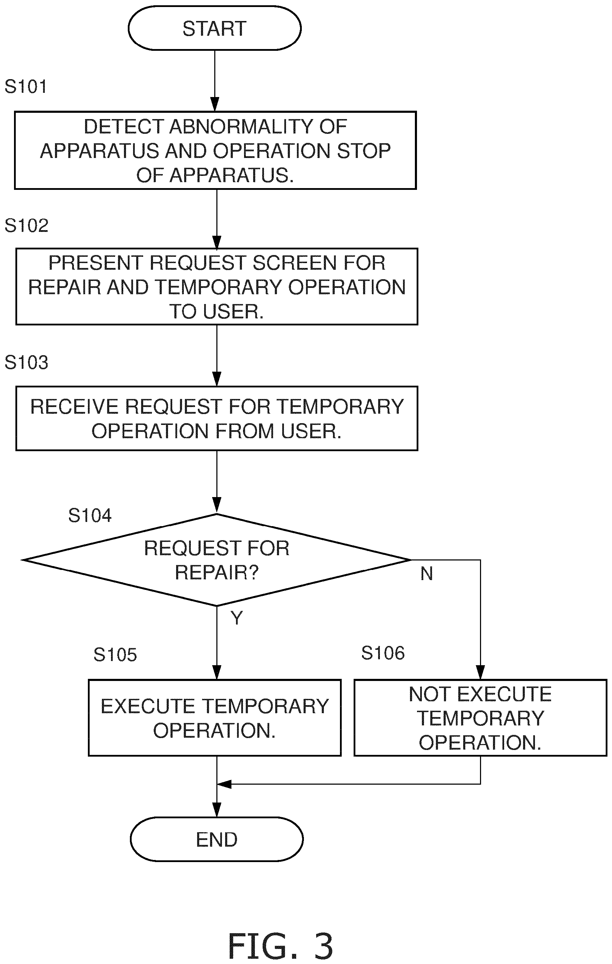

An operation control method for the apparatus 2 by the apparatus management system 1 when an abnormality occurs in the apparatus 2 will be described with reference to a flowchart of Fig. 3.

First, when an abnormality occurs in the apparatus 2, operation of the apparatus 2 is stopped. Then, in step S101, the apparatus management system 1 acquires information indicating that the abnormality has occurred in the apparatus 2, information on content of the abnormality, and information indicating that the operation of the apparatus 2 has stopped.

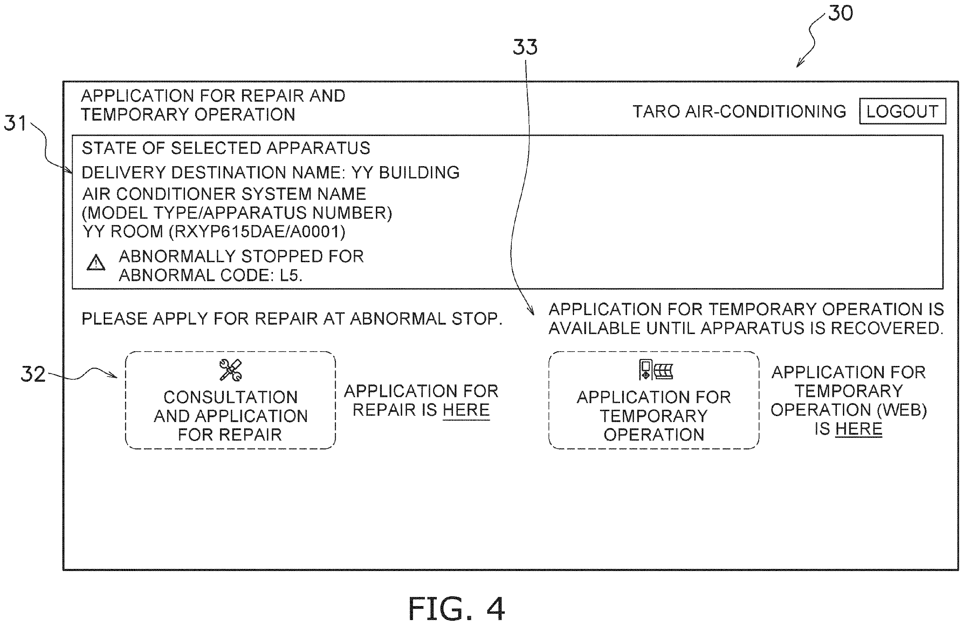

Next, in step S102, the output unit 14 of the apparatus management system 1 outputs abnormality information on the abnormality occurring in the apparatus to the display 30. Simultaneously, the output unit 14 outputs a repair application screen and a temporary operation application screen for the apparatus to the display 30 (Fig. 4). In other words, the repair application screen and the temporary operation application screen are displayed on the display 30.

Fig. 4 illustrates a display example of a repair application screen and a temporary operation application screen of the display 30 in a case where the apparatus 2 is the air conditioner 20. In Fig. 4, abnormality information 31, a repair application button 32, and a temporary operation application button 33 are displayed on the display screen of the display 30. The abnormality information 31 indicates specific content of the abnormality occurring in the apparatus 2. When the repair application button 32 is clicked, the repair application screen is displayed, and when the user further inputs information on the repair application screen, the user can apply for repair. The user applies for repair through the input unit 16 on the repair application screen. When a repair application is made, the acquisition unit 12 acquires repair request information and stores the repair request information in the storage unit 11. The temporary operation application button 33 on the display screen of the display 30 is a button that is clicked to enable application for temporary operation.

In step S103, the operation content determination unit 13 receives a request for the temporary operation from the user. When the request for the temporary operation from the user is present in the S103, the process proceeds to step S104, and the operation content determination unit 13 confirms whether the request for the repair of the apparatus 2 is present or not. When the request for the repair is present, the operation content determination unit 13 determines that the temporary operation is performed in step S105, and the execution unit 15 executes the temporary operation. When the request for the repair is not present in step S104, the operation content determination unit 13 determines not to perform the temporary operation, and the execution unit 15 does not execute the temporary operation.

### (4) Features

(4-1)
The apparatus management system 1 according to the present embodiment determines whether the repair request is present or not when the application for the temporary operation is made from the user. Then, the content of the temporary operation is determined in accordance with whether the repair request is present or not.

By limiting the temporary operation in this manner, it is possible to prevent the apparatus from being damaged by executing the temporary operation for an excessive time or with an excessive capacity.

(4-2)
The apparatus management system 1 according to the present embodiment does not perform the temporary operation when the application for the temporary operation is made and the repair request is not made. This ensures that damage to the apparatus is prevented.

### (5) Modifications

### (5-1) Modification 1A

In the first embodiment, the output unit 14 displays, on the display 30, the information on the abnormality occurring in the apparatus, the application screen for the temporary operation, the repair request screen for the apparatus, and so forth. In a modification 1A, the output unit 14 outputs these pieces of information to a mobile terminal of a user. Examples of the mobile terminal include a smartphone, a notebook PC, and a tablet. In this case, the input unit 16 is the mobile terminal. The user may apply for the repair request or the temporary operation by using the mobile terminal.

### <Second Embodiment

### (6) Configuration and Operation of Apparatus Management System 1a according to Second Embodiment

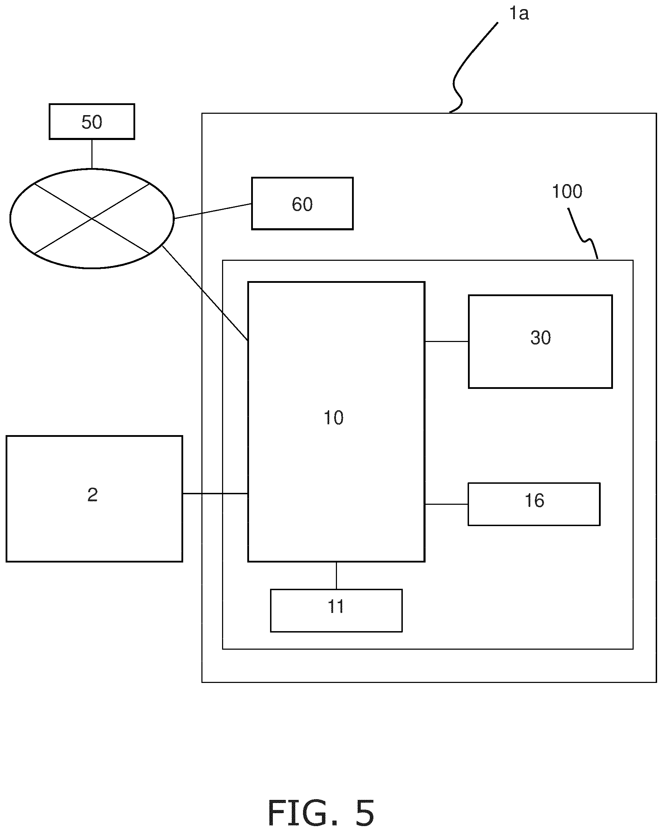

Fig. 5 illustrates a configuration of an apparatus management system 1a according to the second embodiment. In the second embodiment, configurations of a computer 100, a server 60, and so forth are basically the same as those in the first embodiment. A different point is that a program for executing the apparatus management system 1a is stored in the server 60 and executed in the server 60. The computer 100 directly connected to an apparatus 2 uses a program executed in the server 60 as a browser.

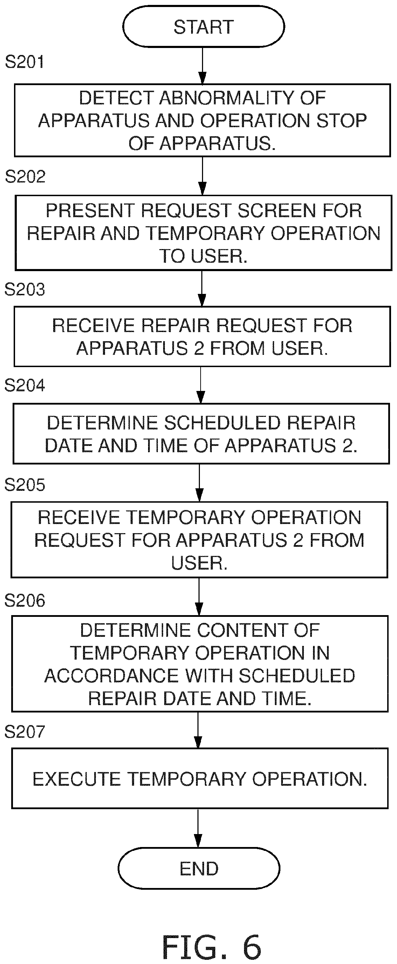

Next, a control flow of the apparatus management system 1a according to the second embodiment will be described with reference to Fig. 6.

Similarly to the first embodiment, the computer 100 of the apparatus management system 1a acquires information on such as occurrence of an abnormality in the apparatus 2, content of the abnormality, and a situation that the apparatus has stopped due to the occurrence of the abnormality (S201). The information is transmitted from the computer 100 to the server 60 via a network. Almost simultaneously, abnormality information on the apparatus 2 is also transmitted to the user. The user activates the browser of the management program of the apparatus management system 1a in the computer 100. The browser may be automatically activated in response to the acquisition of the abnormality information on the apparatus 2. Similarly to Fig. 4, the calculation unit 10 displays the abnormality information on the apparatus 2 on the display 30. Simultaneously, an application screen for repair of the apparatus 2 is displayed on the display screen (S202). In this display, an application screen for temporary operation of the apparatus may be simultaneously displayed (S202).

The apparatus management system 1a receives a repair request for the apparatus 2 from the user (S203). When the repair request is received, the apparatus management system 1a determines a repair schedule of the apparatus in consideration of the application of the user and the schedule of the apparatus management company. The schedule of the apparatus management company may be stored in the server 60 in advance, or the repair schedule of the apparatus may be determined by inquiring the terminal 50 of the apparatus management company about the application schedule of the user via the network. Alternatively, the server 60 may always grasp the schedule of the apparatus management company, and display the schedule to the user when the repair request is received from the user. In any case, the apparatus management system 1a determines the scheduled repair date and time in response to the application for the repair of the apparatus 2 from the user (S204). The determined scheduled repair date and time is stored in the storage unit of the server 60.

Next, the user uses the browser to apply for the temporary operation (S205). The apparatus management system 1a determines the content of the temporary operation in accordance with the scheduled repair date and time (S206) and executes the temporary operation (S207).

When the scheduled date and time of the repair of the apparatus 2 is not determined, the temporary operation is not performed, or even when the temporary operation is performed, the operation with the capacity of the apparatus largely limited is performed. Although the repair schedule has been determined, the temporary operation with the capacity of the apparatus limited to a very small value is performed when the date and time is considerably ahead of the present time, for example, in a case of one month ahead.

In contrast, when the repair schedule of the apparatus 2 has been determined in the near day, for example, two days later, the temporary operation with the capacity of the apparatus being relatively large is performed.

In this way, the apparatus management system 1a executes the temporary operation in accordance with the repair schedule of the apparatus 2, so that it is possible to prevent the damage to the apparatus 2 with the abnormality from becoming large while ensuring comfort of the user as much as possible.

Also in this embodiment, similarly to the first embodiment, operation data at the time of the normal operation, at the time of the occurrence of the abnormality, and at the time of the temporary operation of the apparatus 2 are accumulated in the storage unit 11. The operation data may be accumulated in the server 60. The operation content of the temporary operation may be determined based on the content of the abnormality of the apparatus 2 and/or the operation data of the apparatus 2.

### (7) Features of Second Embodiment

(7-1)
When an abnormality occurs in the apparatus 2 during the normal operation of the apparatus 2 and the apparatus 2 stops, the apparatus management system 1a according to the second embodiment determines the content of the temporary operation in accordance with the scheduled repair date and time and executes the temporary operation.

Since the apparatus management system 1a according to the second embodiment determines the content of the temporary operation in accordance with the scheduled repair date and time, it is possible to prevent the damage to the apparatus 2 from becoming a problem without impairing convenience of the user as much as possible.

### (8) Modifications

### (8-1) Modification 2A

In the second embodiment, the apparatus management system 1a determines the content of the temporary operation based on how far ahead the scheduled repair date and time of the apparatus 2 is from the present time. In a modification 2A, the load of the apparatus and the comfort of the user are also considered. Specifically, the season is also taken into consideration when the content of the temporary operation is determined.

For example, when the apparatus 2 is the air conditioner 20, in the summer season or the winter season, even though the scheduled repair date of the apparatus is a little ahead, the temporary operation with a relatively large capacity of the apparatus is performed. In contrast, in the spring season or the autumn season, the temporary operation with a relatively small capacity of the apparatus is performed even on the same scheduled repair date. By performing the control in this way, it is possible to secure the comfort of the user to the maximum.

### (8-2) Modification 2B

In the second embodiment, the apparatus management system 1a displays, on the display 30, the information on the abnormality occurring in the apparatus 2, the application screen for the temporary operation, the repair request screen for the apparatus, and so forth. In the modification 1A, the apparatus management system 1a outputs these pieces of information to a mobile terminal of a user. Examples of the mobile terminal include a smartphone, a notebook PC, and a tablet. The user may apply for a repair request and/or apply for temporary operation using the mobile terminal.

### <Third Embodiment

### (9) Configuration of Apparatus Management System 1 of Third Embodiment

The configuration of the apparatus management system 1 according to the third embodiment is the same as the configuration of the apparatus management system 1 according to the first embodiment, as illustrated in Fig. 1A of the drawing. Thus, in this case, detailed description of the apparatus management system 1 will be omitted. However, the calculation unit 10 is referred to as a control unit 10 in this case. Although including redundancy, the description of the first embodiment will be supplemented below.

The control unit 10 is connected to the apparatus 2 as illustrated in Fig. 1A. The control unit 10 may be built in the apparatus 2. The control unit 10 controls the apparatus 2. In particular, the control unit 10 controls operation of the apparatus 2. In this case, the operation includes normal operation and temporary operation.

In addition, the control unit 10 controls a sensor for collecting data of the apparatus installed in the apparatus 2. The sensor is, for example, a temperature sensor.

The control unit 10 may collect and accumulate data of the apparatus 2 acquired by the sensor, and determine an abnormality of the apparatus 2.

The display 30 is a display device of the apparatus management system 1, that is, the computer 100. The control unit 10 causes the display 30 to display information to be presented to the user. The user inputs a control command to the input unit 16 of the computer 100 while viewing the display 30. The input unit 16 is input means such as a keyboard, a mouse, a touch panel, or voice input means.

As described in "(2) Air Conditioner 20 as Example of Apparatus 2" of the first embodiment, in this case, the apparatus 2 is the air conditioner 20. The air conditioner 20 can perform cooling operation, heating operation, dehumidifying operation, and ventilating operation. The air conditioner 20 has a refrigerant circuit using a refrigerant. As illustrated in Fig. 2, at least one outdoor unit 21a and a plurality of indoor units 22a, 22b, and 22c are connected to the refrigerant circuit. Each of the indoor units 22a, 22b, and 22c has an indoor heat exchanger and an indoor expansion valve. The outdoor unit 21a includes a compressor, an accumulator, an outdoor heat exchanger, a subcooling heat exchanger, a main expansion valve, a bypass circuit connecting a pipe between the main expansion valve and the subcooling heat exchanger to a pipe on a suction side of the compressor, and an expansion valve of the subcooling heat exchanger on the bypass circuit.

For example, the configuration of the apparatus management system 1 according to the third embodiment may be in another form. For example, a part or all of the functions of the control unit 10 may be included in the server 60. In this case, the server 60 may acquire and accumulate the operation data of the apparatus and determine whether the operation of the apparatus 2 is abnormal or not. Alternatively, as described in the second embodiment, the control program may be executed by the server 60, and the computer 100 directly connected to the apparatus 2 may be used as a terminal.

In another embodiment, as described in the modification 1A, the user may carry a mobile terminal, and notification to the user may be performed on a display attached to the mobile terminal. A start operation of the user for the operation may be input with the mobile terminal.

### (10) Operation Control Method for Apparatus 2 by Apparatus Management System 1 according to Third Embodiment

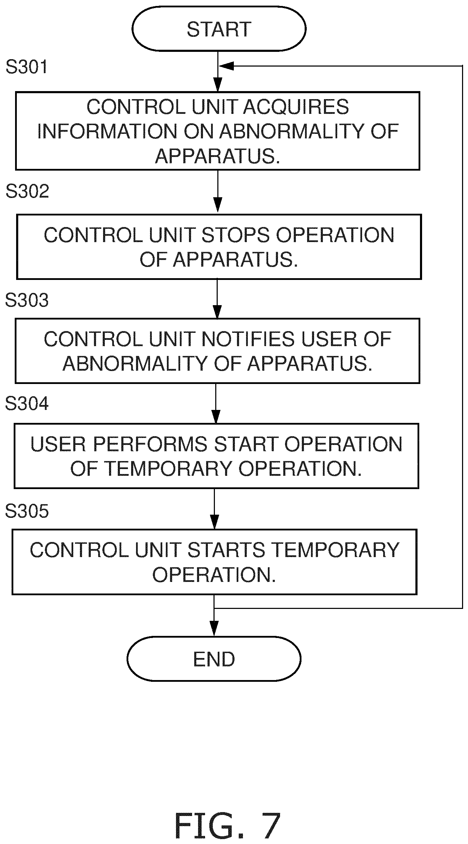

An operation control method for the apparatus 2 by the apparatus management system 1 according to the third embodiment will be described with reference to a flowchart of Fig. 7. In this case, a refrigerant leakage is exemplified as an abnormality of the apparatus. Also, the apparatus 2 is an air conditioner 20, and performs cooling operation.

The apparatus management system 1 according to the present embodiment constantly monitors the refrigerant leakage amount. In this case, the index of the refrigerant leakage amount is, for example, RLI or ΔRLI that is a change amount thereof. RLI is a ratio of the exergy in a subcooling region and a two-phase region of a condenser. The occurrence of a refrigerant leakage reduces RLI.

By calculating the RLI index, it is possible to detect refrigerant leakage even when, for example, about 10% of the refrigerant leaks. The air conditioner can perform normal operation even when the refrigerant is lost up to about 20% from the initial value. Further, even when 70% of the refrigerant that is more than 50% of the refrigerant is lost, the air conditioning operation can be performed. In such a state in which the air conditioning operation is performed while the refrigerant leaks, of course, a leakage of the refrigerant by an amount exceeding 50% is not preferable in terms of the load on the compressor. However, such a leakage does not immediately hinder the user, and the user likely leaves the refrigerant leakage even though the refrigerant leakage is detected in the apparatus. Even more, the refrigerant leakage of about 10% or 20% tends to be left as it is because the deterioration of the air conditioning capacity is small, the hindrance to the apparatus is small, and the detection is difficult in the past. However, the refrigerant leakage is not preferable in terms of the load on the global environment. Even 10% or 20% leads to a large amount of refrigerant leakage when the system becomes large. The refrigerant leakage may cause a problem in terms of national or international regulations.

Thus, in the present embodiment, in order to reduce the refrigerant leakage, an object is to quickly detect the refrigerant leakage of the system and thereby motivate the user to perform early repair.

The description returns to Fig. 7.

The apparatus management system 1 constantly monitors the refrigerant leakage amount, and acquires a refrigerant leakage by a predetermined amount, for example, 10% (S301). The apparatus management system 1 may detect the refrigerant leakage amount, or may acquire information on the refrigerant leakage from another device that detects the refrigerant leakage of the apparatus 2 without directly detecting the refrigerant leakage amount. In any case, the control unit 10 acquires information on an abnormality of the apparatus 2. Also, in this case, the abnormality of the apparatus includes a refrigerant leakage by about 10% to 20% in the case of the refrigerant leakage described above. In other words, the abnormality of the apparatus also includes an abnormality that does not particularly hinder the operation of the apparatus.

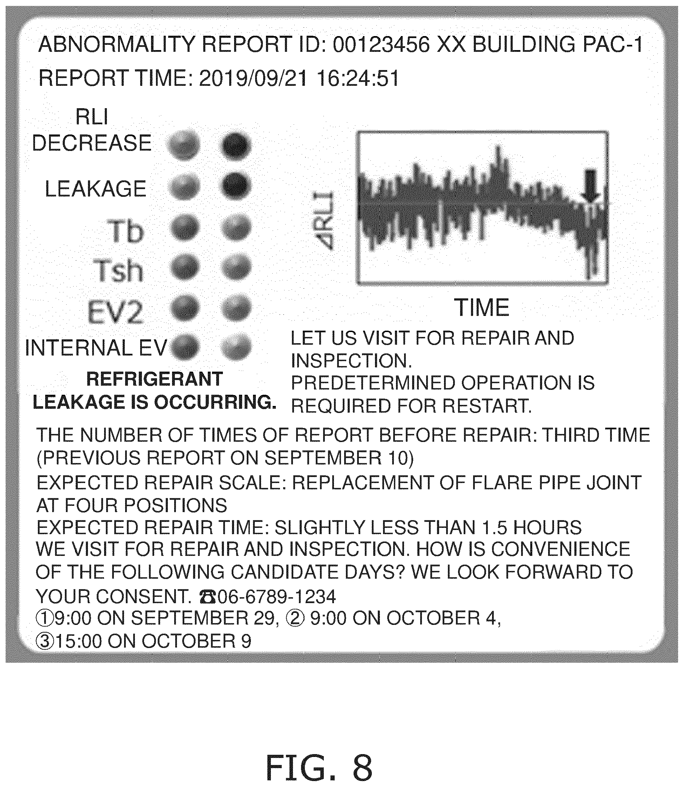

When the information on the abnormality of the apparatus 2 is acquired, the control unit 10 determines whether or not to stop the apparatus 2, and when it is determined to stop the apparatus 2, the control unit 10 stops the operation of the apparatus 2 (S302). After the operation is stopped, or before or after the operation is stopped, the control unit 10 notifies the user of the abnormality of the apparatus (S303). Fig. 8 illustrates a display example of the display 30 at the time of the notification.

In Fig. 8, line 1 indicates the apparatus 2 that has issued an abnormality report. Specifically, "ID:00123456 XX building PAC-1" is displayed. Next, line 3 to line 8 on the left side of the display indicate items of content of the abnormality. For each item, whether the lamp is green (normal) or red (abnormal) is indicated by whether the lit lamp is green (left lamp) or red (right lamp). Line 3 indicates whether a refrigerant leakage parameter of "RLI" is normal or not in "RLI decrease". In Fig. 8, it is indicated that the RLI parameter is abnormally decreased. Line 4 is a lamp indicating "leakage", which indicates that the control unit 10 determines that a refrigerant leakage occurs in the apparatus 2 from "RLI decrease". In Fig. 8, the red lamp is lit, which indicates that the refrigerant leakage is occurring. Next, line 5 is "Tb", which indicates whether the outlet temperature of the outdoor heat exchanger is normal or abnormal. In Fig. 8, "Tb" indicates normal. Next, line 6 is "Tsh", which indicates whether the outlet temperature of the subcooling heat exchanger on the bypass circuit is normal or abnormal. In Fig. 8, "Tsh" indicates normal. Next, line 7 is "EV2", which indicates whether the opening degree of the expansion valve of the subcooling heat exchanger is normal or abnormal. In Fig. 8, "EV2" indicates normal. Next, line 8 is "internal EV", which indicates whether the opening degree of the indoor expansion valve is normal or abnormal. In Fig. 8, "internal EV" indicates normal.

Below the lamp indicating green (normal) or red (abnormal) on the left side of the display of Fig. 8, a display of "refrigerant leakage is occurring" is made in line 9. This clearly indicates the reason why the user has stopped the operation of the apparatus due to the occurrence of the abnormality.

On the right side of the display of Fig. 8, a graph presenting a change over time of ΔRLI indicating a change of RLI of the refrigerant leakage index is indicated. An arrow indicating a decrease in ΔRLI is illustrated at a time close to the report time, in other words, near the right end.

Also, below the graph, messages "Let us visit for repair and inspection. Predetermined operation is required for restart." are displayed. The message "Let us visit for repair and inspection." is intended to request permission of the user for early repair from the apparatus management company side to the user or to urge permission to perform repair. Also, the message "Predetermined operation is required for restart." is intended to teach the user that a start operation different from a normal operation is requested when the user performs the temporary operation.

Next, from line 10 to line 15 in Fig. 8, in other words, at the bottom, the following description is displayed.
Line 10: The number of times of report before repair: Third time (previous report on September 10)
Line 11: Expected repair scale: Replacement of flare pipe joint at four positions
Line 12: Expected repair time: Slightly less than 1.5 hours
Line 13 to line 14: We visit for repair and inspection. How is convenience of the following candidate days? We look forward to your consent. TEL 06-6789-1234
Line 15: (1) 9:00 on September 29, (2) 9:00 on October 4, (3) 15:00 on October 9

The description in line 10 indicates the number of times of report. There is a possibility that the process in which the control unit 10 first acquires the information on the abnormality of the apparatus 2 (S301), stops the operation (S302), notifies the user (S303), and performs the first temporary operation (S304, S305) is repeated until the repair is performed as described later. Thus, this description indicates how many times the report is issued or the notification is made. In a case where the control unit 10 first acquires the information on the abnormality of the apparatus 2 and notifies the user of the information, "first time" should be indicated. In Fig. 8, "third time" is displayed.

"Expected repair scale" in line 11 and "expected repair time" in line 12 are described by the control unit 10 or the server 60 predicting the content of the abnormality and the content of the repair of the abnormality.

In line 13 to line 15, the apparatus management system 1 proposes a repair request to the user. In line 15, the control unit 10 acquires a plurality of repair available dates and times for the apparatus 2 from the server 60 or the terminal 50 of the apparatus management company and presents the acquired repair available dates and times to the user. The user who has received such notification can select a repair available date and time convenient for the user from the presented plurality of repair available dates and times, informs the apparatus management company, and hence can determine a repair date and time.

The apparatus 2 is stopped in step S302, and the user who has been notified of the abnormality of the apparatus 2 in step S303 may or may not request repair of the apparatus 2, but often performs temporary operation next. When the abnormality of the apparatus 2 does not cause a large hindrance to the operation of the apparatus 2 as in the case of the leakage of the refrigerant by a relatively small amount as described above, the control unit 10 permits the temporary operation.

When the temporary operation is possible, the user performs a start operation of the temporary operation. As described in the notification example of the apparatus 2 in Fig. 8, the user is notified that the temporary operation (restart) is possible, and knows that a start operation (predetermined operation) different from a normal start operation is required for the temporary operation (restart).

An example of another start operation is, for example, a button operation or a valve operation. More specifically, examples of other activation operations include A, B, and C as follows.
A: A cover of a side surface of an indoor unit is opened and a button is pressed.
B: A knob hidden under a filter in an indoor unit (this knob is similar to a knob of a reserve tank of a motorcycle) is turned 90° rightward.
C: Button operation inquiry is sent to a service center (buttons with colors of the remote controller are pressed in the order of indication. For example, the order is blue, blue, red, blue, black, and so on.

For example, as the start operation of the temporary operation, as in A to C, the temporary operation may be activated by a start operation different from a normal start operation, or may be activated by further adding an operation for normal operation.

The user performs the start operation different from such the normal start operation (S304). The control unit 10 that has received the start operation by the user starts the temporary operation of the apparatus 2 (S305).

As in the case of the first embodiment, the content of the temporary operation may be changed depending on whether the user is notified of the abnormality of the apparatus or not in step S303, and simultaneously, the user has made a repair request in response to an inquiry for the repair request as indicated in the display of Fig. 8.

The apparatus management system 1 continues to monitor an abnormality of the apparatus even after the temporary operation is started. In the present embodiment, a refrigerant leakage is continuously monitored. Monitoring of the parameter for a refrigerant leakage is continued. In the flowchart of Fig. 7, the process returns again from step S305 to before step S301. For example, in the case of a refrigerant leakage, once the refrigerant starts to leak, the refrigerant leakage amount usually increases unless repair is performed. For example, in a case where the operation of the apparatus is stopped due to the refrigerant leakage of 10% at the first time, when the refrigerant leakage of 20% is determined during the temporary operation at the second time, the control unit 10 determines that the apparatus is abnormal (S301) and stops the operation (S302).

When the user repeats the temporary operation without repair, the control unit 10 repeats the report to the user in step S303. As a matter of course, the content displayed on the display 30 in Fig. 8 strongly urges the user to repair.

The embodiment of the present disclosure has been described above, and it is understood that the embodiment and details can be changed in various ways without departing from the gist and scope of the present disclosure described in the claims.

### Reference Signs List

- 1, 1a: apparatus management system
- 2: apparatus
- 10: calculation unit
- 11: storage unit
- 12: acquisition unit
- 13: operation content determination unit
- 14: output unit
- 15: execution unit
- 16: input unit
- 20: air conditioner
- 21a, 21b: outdoor unit
- 22a, 22b, 22c: indoor unit
- 30: display
- 50: terminal of apparatus management company
- 60: server
- 100: computer

### Citation List

### Patent Literature

PTL 1: Japanese Unexamined Patent Application Publication No. 2004-69080

## Claims

1. An apparatus management system (1, 1a) that determines whether temporary operation is possible or not when an abnormality of an apparatus (2) occurs, and performs the temporary operation when possible, the system comprising:
a storage unit (11) that stores information on repair of the apparatus in association with the abnormality occurring in the apparatus;
an acquisition unit (12) that acquires the information on the repair of the apparatus and writes the information in the storage unit; and
an operation content determination unit (13) that determines operation content of the temporary operation,
wherein the information on the repair of the apparatus includes information on a repair request for the abnormality of the apparatus, and
wherein the operation content determination unit determines the operation content of the temporary operation in accordance with whether the repair request is present or not.

2. The apparatus management system according to claim 1, wherein, when the repair request is present, the operation content determination unit determines to perform the temporary operation.

3. The apparatus management system according to claim 1 or 2, wherein, when the repair request is not present, the operation content determination unit determines to perform the temporary operation for a shorter period than a period when the repair request is present in a case where the temporary operation is performed, or determines not to perform the temporary operation.

4. The apparatus management system according to claim 1, wherein the operation content determination unit determines to perform high-capacity operation in which the apparatus provides a high capacity when the repair request is present, and determines to perform low-capacity operation in which the apparatus provides a capacity lower than the capacity of the high-capacity operation when the repair request is not present.

5. The apparatus management system according to any one of claims 1 to 4, wherein the operation content determination unit determines the operation content of the temporary operation in accordance with a time until a scheduled repair date and time.

6. The apparatus management system according to any one of claims 1 to 5, wherein the operation content determination unit determines the operation content of the temporary operation in accordance with a season.

7. The apparatus management system according to any one of claims 1 to 6,
wherein the information on the repair of the apparatus includes operation data of the apparatus, and
wherein the operation content determination unit determines the operation content of the temporary operation in accordance with the operation data of the apparatus.

8. The apparatus management system according to any one of claims 1 to 7,
wherein the apparatus is an air conditioner (20), the air conditioner has an indoor unit (22) and an outdoor unit (21), and the outdoor unit includes a compressor (23), and
wherein the operation content of the temporary operation includes one or a combination of at least two selected from the group consisting of an operation frequency of the compressor, a number of the compressors to be operated, a number of the outdoor units to be operated, a set temperature of the indoor unit, an air volume of the indoor unit, an air direction of the indoor unit, and a period of the temporary operation.

9. The apparatus management system according to any one of claims 1 to 8, further comprising:
an output unit (14) that outputs abnormality information on the abnormality occurring in the apparatus,
wherein the output unit outputs the abnormality information corresponding to a performance status of the temporary operation and/or a repair request status.

10. The apparatus management system according to any one of claims 1 to 9, further comprising an execution unit that executes the temporary operation based on the determined content of the temporary operation.

11. The apparatus management system according to claim 1, further comprising:
a control unit (10) that controls the apparatus,
wherein, when the abnormality of the apparatus occurs, the control unit stops operation of the apparatus and performs a first notification to a user of the apparatus, and
wherein, when the temporary operation is started after the operation of the apparatus is stopped and before the apparatus is repaired, the control unit further requests the user to perform a start operation different from a start operation when normal operation of the apparatus is started.

12. The apparatus management system according to claim 11, wherein the start operation is a button operation or a valve operation.

13. The apparatus management system according to claim 11 or 12, wherein the control unit performs a second notification to the user of the apparatus after the temporary operation of the apparatus is started.

14. The apparatus management system according to any one of claims 11 to 13, wherein, in the first notification or the second notification, the control unit requests the user to permit early repair, urges the user to permit the early repair, and informs a repairer of content responded by the user to the repair request.

15. The apparatus management system according to claim 14, wherein the control unit acquires a plurality of repair available dates and times for the apparatus from the repairer, presents the plurality of repair available dates and times at the first notification or the second notification, and allows the user to select a repair available date and time to determine a repair date and time.

16. The apparatus management system according to any one of claims 11 to 15, further comprising:
a display (30),
wherein, in the first notification or the second notification, the control unit causes the display to display content of the notification.

17. The apparatus management system according to claim 16, wherein, at the first notification or at the second notification, the control unit causes the display to display a reason for determining that the apparatus is abnormal, together with the content of the notification.

18. The apparatus management system according to claim 17, wherein the reason for determining that the apparatus is abnormal includes data of the apparatus.
